# EUROPEAN PATENT SPECIFICATION

(11) **EP 3 972 720 B1**
(45) Date of publication and mention of the grant of the patent: **01.05.2024**
(21) Application number: 20809962.2
(22) Date of filing: 19.05.2020
(51) Int. Cl.: C10L 3/10, B01D 53/04, B01D 53/047

(54) **A BIOGAS UPGRADATION SYSTEM WITH REDUCED METHANE SLIPPAGE**
BIOGASVEREDELUNGSSYSTEM MIT REDUZIERTEM METHANSCHLUPF
SYSTÈME DE VALORISATION DE BIOGAZ AVEC GLISSEMENT RÉDUIT DU MÉTHANE

(30) Priority: 20.05.2019 IN 201921019957
(43) Date of publication of application: 30.03.2022
(73) Proprietor: Atmos Power Pvt. Ltd., Ahmedabad Gujarat 382330 (IN)
(72) Inventor: SINGH, Brij Raj, Gujarat 380058 (IN); TARAPORE, Navroz Homi, Gujarat 380054 (IN)
(74) Representative: ip21 Ltd
(86) International application number: PCT/IN2020/050453
(87) International publication number: WO 2020/234901

(56) References cited:
- WO-A1-2011/097162
- WO-A1-2013/052325
- WO-A1-2014/118262
- US-A- 4 784 672
- "DRAFT Comparative Assessment of Technology Options for Biogas Cleanup", , 31 October 2014 (2014-10-31), pages 67-68, XP055763054,
- Frank Scholwin, Johan Grope and Angela Clinkscales, Francisco Boshell, Deger Saygin, Alessandra Salgado, Amr Seleem: In: "BIOGAS FOR ROAD VEHICLES: Technology brief", 31 March 2017 (2017-03-31), IRENA - International Renewable Energy Agency, Abu Dhabi, XP009528718, ISBN: 978-92-9260-060-0 pages 1-62,

## Description

### FIELD OF THE INVENTION

The present invention relates to a biogas upgradation system and more particularly it relates to a biogas upgradation system with reduced methane slippage, which can extract maximum amount of methane from the raw biogas and offer it as fuel grade methane.

### BACKGROUND OF THE INVENTION

The rising price of fossil fuels and the need to fight against global warming promotes the development of alternative energy production techniques that are environmentally friendly. This has led to an observed rise in the use of organic waste, from agriculture, food industries, landfills, waste water treatment plants, etc. which can be used as an input source for the generation of biogas. The biogas with the help of advanced technology can then be upgraded into biomethane also known as renewable natural gas, having similar properties to natural gas.

Biogas refers to a mixture of different gases produced by the breakdown of organic matter through anaerobic digestion or fermentation of waste waters and solid residues. The material digested can include any type of organic matter such as manure, sewage sludge, agricultural waste, municipal waste, plant material, green waste or food waste.

To compresses, transport or make use of biogas as a replacement for CNG or LPG, it must be "enriched" or "upgraded" to remove its impurities. The typical steps for upgrading biogas include cleaning, drying & refining the biogas. The biogas needs to be dried and devoid of hydrogen sulphide. Furthermore, removal of most of the carbon dioxide raises the methane content sufficiently.

The biogas upgradation depends on the type of feed material used, climatic condition, production site and type of the technology adapted for the production. The main constituents of biogas are methane (CH₄) and carbon dioxide (CO₂) along with some traces of gases such as water vapor, hydrogen sulfide (H₂S), nitrogen, hydrogen and oxygen. Carbon dioxide and traces of gases must be removed because the presence of hydrogen and water vapor may cause corrosion on metal surfaces, in addition to reducing the heating value of the upgraded (product) gas.

While most countries have their own defined parameters for biomethane, typically the upgraded biogas has to have a methane content of more than 90%. There are various techniques for biogas upgradation such as water scrubbing or pressurized water scrubbing, membrane permeation, amine gas treating or amine absorption, cryogenic upgradation and pressure swing adsorption.

One such technique is "Water scrubbing" or "Pressurized water scrubbing" which involves passing the biogas stream through an absorber or scrubber packed with media to provide a high contact surface area at a gas/water interface. The biogas is brought into the contact with water at elevated pressure and low pH of absorbent water; components of the biogas are absorbed into the water until saturation equilibrium is reached. The gas which is not absorbed is discharged from the scrubber. This discharged gas is rich in methane but also contains residual traces of hydrogen sulphide and carbon dioxide. Further, this discharged gas is saturated with water.

Various prior arts have been disclosed describing the biogas upgradation system by water scrubbing method. The prior art document US 20100107872A1 discloses a water scrubbing method for biogas upgradation. Described therein is biogas purification/upgradation of biogas generated from anaerobic digestion of waste material. The limitations of this method are clogging of packing due to the growth of bacteria and formation of elemental sulphur, especially when incoming biogas has a high level of hydrogen sulphide in it.

Another technique is "Membrane permeation" which works on the principle of pressure difference between the gases. The membranes which are available for the separation can be grouped into two main types i.e. high and low pressure membranes. The low pressure membrane system works at pressure close to the atmospheric pressure whereas the high pressure membrane system works at the pressures of up to 20 Bar g. The carbon molecular sieve (CMS) hollow fiber membranes are used under high pressure for carbon dioxide removal from the raw biogas. In multistage membrane separation, the waste gases from the first stage are recycled within the process to enrich the methane content of the final gas output.

US Patent No. 6,565,626 B1 discloses membrane separation process with three membrane separation stages, wherein a retentate stream and a permeate stream from stage 2 and 3 respectively are recycled to the crude gas stream. Limitations of the above said method are high initial investment due to membrane cost, sensitivity of the membranes to trace impurities leading to fouling of membranes and thus, high replacement costs.

Another technique "Pressure swing adsorption" (PSA) is a process by which multiple gas species from the gases mixture can be separated. The adsorbents such as zeolite, activated carbon and molecular sieves play a crucial role in adsorption. The separation method relies on high pressure, the higher the pressure, the more gas is adsorbed. The raw biogas is compressed to a high pressure using compressors and then fed into an adsorption column which retains only carbon dioxide but not methane. When column material gets completely saturated with carbon dioxide, the pressure is released and carbon dioxide gets desorbed. To operate the PSA process continuously, several columns are required which operate sequentially.

US Patent No. 7,025,803 B2 discloses a methane recovery process by PSA method. It utilizes a plurality of pressure swing adsorption units to remove some of the volatile organic compounds from the feed mixture. Various disadvantages related of the aforesaid method are poisoning of porous media, disposal of the media after poisoning or at the end of the useful life, replacement of the media and methane loss to atmosphere. Further, from this conventional PSA technique, methane loss to the atmosphere is high, which is undesired & harmful as methane is a greenhouse with a higher global warming potential compared to carbon dioxide.

Apart from the aforesaid drawbacks, the methane recovery from a typical PSA based upgradation system is less than 90%. During the adsorption process, the molecular sieve unintentionally adsorbs some of the methane along with the carbon dioxide which is an undesired outcome. If methane escapes along with the carbon dioxide in the exhaust, it is a significant financial loss to the producer. Also, methane is a greenhouse gas and allowing it to escape into atmosphere causes severe environmental impacts in the long run.

Hence, it is a desperate need to develop a system and process which reduces the methane slippage as compared to existing processes and offers the highest possible methane capture rate. The present invention mainly focuses on offering methane recovery greater than 99%. The process is exhaustively described in the detailed description.

### OBJECT OF THE INVENTION

The main object of the present invention is overcoming the drawbacks of the existing PSA method by providing an improved biogas upgradation system and method with reduced methane slippage.

Another object of the present invention is to provide a biogas upgradation system which enables capture of methane contained in the raw biogas stream with the least methane slippage compared to the existing PSA methods at the same throughput, and hence reduced environmental pollution by this strong greenhouse gas.

Yet another object of the present invention is to provide a biogas upgradation system which mainly focuses on methane recovery by directing the exhaust gas stream from the dryer and active MPSA tower into another similar cycle for extracting maximum amount of methane (more than 99%) from input gas and providing a useful choice to the industry.

Still another object of the present invention is to provide a biogas upgradation system having buffer balloon, reduced energy consumption, high production efficiency and low equipment cost.

Further object of the present invention is to provide a biogas upgradation system which reduces methane slippage to less than 1% and thus, makes the process more financially viable for the producer.

### SUMMARY OF THE INVENTION

The present invention relates to a biogas upgradation system with reduced methane slippage according to claims 1 and 2, and a method for upgrading biogas carried out in said system according to claims 3-7, by extracting maximum amount of methane and offering it in the product gas. The aforesaid system mainly comprises a pre-treatment unit (1), a drying unit (2), a methane enrichment unit (3), and a methane recovery unit (4). The pre-treatment unit (1) removes the hydrogen sulphide from the raw biogas feed and sends it to the drying unit (2) for moisture removal. Then, the dried biogas is directed to the methane enrichment unit (3) for extracting the methane by adsorbing the carbon dioxide into the molecular sieve. An exhaust stream from the drying unit (2) and the methane enrichment unit (3) is directed to the methane recovery unit (4) for extracting the maximum amount of methane. By re-circulating the exhaust gas into the methane recovery unit (4), the present invention significantly reduces methane loss to less than 1%.

### BRIEF DESCRIPTION OF THE DRAWING

Other objects, advantages and novel features of the invention will become apparent from the following detailed description of the present embodiment when taken in conjunction with the accompanying drawings.

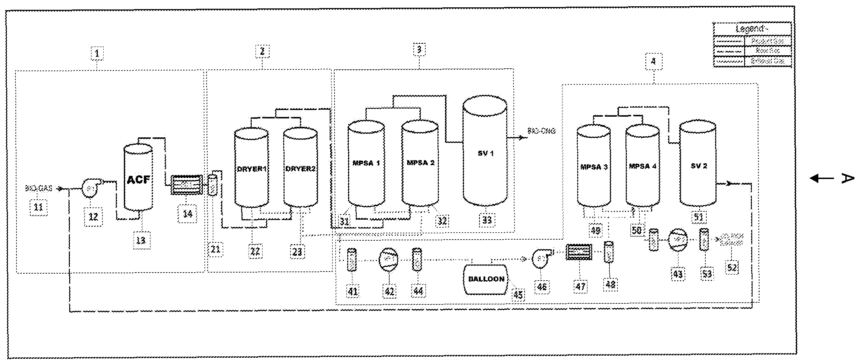

Figure 1 depicts a schematic view of a biogas upgradation plant with reduced methane slippage according to the present invention.

### DETAILED DESCRIPTION

Before explaining the present invention in detail, it is to be understood that the invention is not limited in its application to the details of the construction and arrangement of parts illustrated in the accompanied drawing(s). The invention is capable of other embodiments, as depicted in different figure(s) as described above and of being practiced or carried out in a variety of ways. It is to be understood that the phraseology and terminology employed herein is for the purpose of description and not of limitation.

The present invention discloses a biogas upgradation system with reduced methane slippage by extracting maximum amount of methane, from the biogas feed and offering it as fuel grade methane. The upgradation system according to present invention significantly reduces the methane loss to less than 1%.

Further, it is to be also understood that the term "ACF" refers to activated carbon filter, "MS" refers to moisture separator and "MPSA" refers to medium/minor pressure swing adsorption. Further the term "VSP" refers to vacuum suction port and "VDP" refers to vacuum discharge port.

Now referring to Fig. 1, an exemplary embodiment of the present invention, the biogas upgradation system (A) mainly comprises a pre-treatment unit (1), a drying unit (2), a methane enrichment unit (3), and a methane recovery unit (4).

It is to be understood that the biogas feed stream refers to the mixture of methane, carbon dioxide, water, hydrogen sulphide and other trace elements.

Further, referring to Fig. 1, said pre-treatment unit (1) comprises a biogas inlet (11) for receiving the raw biogas, a blower (12), an activated carbon filter (ACF) (13), and a pre-cooler (14). Said raw biogas is sucked by the blower (12) and discharged ahead into the ACF (13). In this unit, the ACF (13) removes hydrogen sulphide content from the incoming biogas and reduces it to less than 10 ppm. Initially, the raw biogas contains 100-1000ppm hydrogen sulphide which is beyond the standards prescribed by the bureau of Indian Standards. Hydrogen sulphide and water vapor are corrosive in nature and lead to corrosion when they come in contact with metal surfaces and also reduce the heating value of the product/upgraded gas. Hence, in order to reduce hydrogen sulphide content, the raw biogas is passed through the ACF (13). After removing hydrogen sulphide content through the ACF (13), the treated biogas enters into the pre-cooler (14). The pre-cooler (14) is basically a heat exchanger, which reduces the temperature of the gas coming from the ACF (13). The cooled biogas is directed to a Moisture separator for removing majority of the moisture after which it is introduced in the drying unit (2) for further drying.

Due to cooling of the biogas, it carries water vapor. Hence, said water vapor needs to be removed from the pre-treated biogas to increase the efficiency or energy input; prevent corrosion of engine, pipe lines and other components; partial removal of hydrogen sulphide, ammonia, siloxane and other water soluble gases, and reduce the contamination. In order to attain said objectives, the cooled biogas is fed into the drying unit (2).

The drying unit (2) comprises of a moisture separator (21), and a pair of drying towers (22, 23). Said MS (21) removes excess water vapor from the biogas coming from the pre-cooler (14). However, after passing from the MS (21), said biogas still carries some moisture. Hence, in order to remove remaining moisture content from the treated biogas, it is further fed into the desiccant based drying towers (22, 23). Said desiccant is a hygroscopic substance that induces or sustains a state of dryness (desiccation) in its vicinity. Said pair of the drying tower (22, 23) is operated sequentially according to the pre-defined cycle time (5-10 minutes). So, at one moment of time only one dryer (either 22 or 23) is active. At the same time, the other drying tower (either 22 or 23) is regenerating under the vacuum. So, after removing the water vapor from the pretreated biogas into the moisture separator (21), the treated biogas enters into the active drying tower (22, 23) which dries the gas and reduces its dew point to less than -60°C.

It is to be understood that the dew point is the temperature to which air must be cooled to become saturated with water vapor. When said treated biogas is cooled further, the airborne water vapor will condense to form liquid water (dew). The dried biogas from the said active dryer (22, 23) is then fed into the methane enrichment unit (3).

As described in the Fig. 1, the methane enrichment unit (3) comprises of a first pair of medium/minor pressure swing adsorption (MPSA) towers (31, 32) and a biogas surge tank (33). Said dried biogas is fed into the active first pair of MPSA tower (31, 32) from the active dryer (either 22 or 23) for the removal of carbon dioxide using various grades of zeolite based molecular sieves. Similar to the dryers (22, 23), the first pair of MPSA tower (31, 32) also works sequentially based on the saturation of the molecular sieve by adsorbing carbon dioxide. The dried biogas is pressurized up to 0.7 bar g (1.7 bar absolute) in the first pair of MPSA tower (31, 32). Due to pressurization, the molecules are usually loosely adsorbed in the cavities of the molecular sieve but not irreversibly bound. The molecular sieve specifically separates a number of different gaseous compounds from the dried biogas. Said molecular sieve possess specific affinity for the carbon dioxide. Before the molecular sieve of the MPSA tower (31, 32) is completely saturated with the carbon dioxide, the stream of dried biogas is directed into another MPSA tower (31, 32) that has been regenerated and switched into adsorption mode to achieve continuous operation. Regeneration of the saturated molecular sieve is performed by depressurization using a vacuum pump.

The selectivity of adsorption is achieved by the different mesh sizes and/or application of pressure. When the pressure is released, the compounds extracted from the biogas are desorbed. The process is therefore often called "pressure swing adsorption" (PSA). Said PSA methods takes place over four phases namely pressure build-up, adsorption, depressurization and regeneration as described above.

Thus, after the application of 0.7 bar g (1.7 bar absolute) pressure, only carbon dioxide gets adsorbed in the molecular sieve which ultimately leaves the product gas which is rich in methane. Then, said product gas is allowed to flow into the biogas surge tank (33). The gas in the surge tank is tested for the desired quality, after which it is pressurized based on its end application like PNG or CNG.

After carrying out this method for capturing methane from the raw biogas feed as discussed above, the exhaust gas in the regenerating dryers (22, 23) and the regenerating first pair of MPSA tower (31, 32) still contain traces of methane which is lost when the gas is exhausted without being further processed. Hence, in order to prevent such methane slippage, the exhaust gas from the regenerating dryer (22, 23) and the regenerating first pair of MPSA tower (31, 32) is directed to the methane recovery unit (4).

The methane recovery unit (4) comprises of a vacuum suction port (VSP) (41), a plurality of vacuum pumps (42, 43), a vacuum discharge port (VDP) (44), a biogas buffer balloon (45), a blower (46), a pre-cooler (47), a moisture separator (MS) (48), a second pair of MPSA towers (49, 50), a surge tank (51) and an exhaust (52). The said unit is a miniature version of the methane enrichment unit (3) as described above. The exhaust gas from the regenerating dryer (22, 23) and the regenerating first pair of MPSA tower (31, 32) is directed to the VSP (41), with the help of vacuum pump (42). Said vacuum pump (42) further conveys the exhaust gas to the VDP (44). The VDP (44) serves a similar function to the MS (21, 48). Then after the exhaust gas is introduced into the biogas buffer balloon (45) through the VDP (44). Said buffer balloon (45) stores the exhaust gas collected from the dryer (22, 23) and the regenerating first pair of MPSA tower (31, 32). The blower (46) sucks and pressurizes the exhaust gas being stored into the biogas buffer balloon (45) at 0.7 bar g (1.7 bar absolute) and sends it to the pre-cooler (47) for reducing the temperature of the exhaust gas. Said cooled exhaust gas is then fed into MS (48) from the pre-cooler (47) for residual moisture removal. After that the dried exhaust gas is introduced into the active second pair of MPSA tower (49, 50) for removal of residual carbon dioxide in the manner as described above in detail. Once the said dried exhaust gas enters into the active second pair of MPSA tower (49, 50), the remaining methane is extracted from it and then directed into the surge tank (51) while the carbon dioxide adsorbed by the molecular sieve is allowed to vent out into the atmosphere or collected if required through the VDP (53) from said exhaust (52) via vacuum pump (43). The extracted methane gas from the surge tank (51) is allowed to flow back into the pre-treatment unit (1), drying unit (2) and methane enrichment unit (3) for recycling as discussed above. The methane rich stream is then collected from the biogas surge tank (33) and pressurized depending on the end application.

The present invention is experimented and illustrated more in details in the following example. It describes and demonstrates embodiments within the scope of the present invention. It is given solely for the purpose of illustration and is not to be construed as limitations of the present invention, as many variations thereof are possible without departing from spirit and scope.

### Example 1:

Various parameters regarding input and output gas for the pre-treatment unit (1), the drying unit (2) and the methane enrichment unit (3) are as mentioned below:

| **Parameter** | **Input gas** | **Output gas** |
|---|---|---|
| Gas flow rate | 150 m³/Hour | 78-86 m³/Hour (±2%) |
| Gas pressure | 0.7 Bar g (1.7 Bar Absolute) | 0.3-0.6 Bar g (1.3-1.6 Bar Absolute) |
| Gas temperature | 30-40° C | 30-40° C |
| Methane | 50-55% | 96% (±2%) |
| Carbon dioxide (CO₂) | 35-40% | <3.5% |
| Hydrogen sulphide (H₂S) | 500-1000 PPM | <10 PPM |
| Water (Moisture) | Saturated | Dew Point (-65° C) |
| Oxygen and Nitrogen | Balance | Balance |

Various parameters regarding input and output gas for the methane recovery unit (4) are as mentioned below:

| **Parameter** | **Input gas** | **Output gas** |
|---|---|---|
| Gas flow rate | 75 m³/Hour | 35-45 m³/Hour (±2%) |
| Gas pressure | 0.7 Bar g (1.7 Bar Absolute) | 0.3-0.5 Bar g (1.3-1.5 Bar Absolute) |
| Gas temperature | 30-40° C | 30-40° C |
| Methane | 20-25% | 50-55% |
| Carbon dioxide (CO₂) | 70-75% | 45-50% |
| Hydrogen sulphide (H₂S) | 20 PPM | <10 PPM |
| Water (Moisture) | Saturated | Dew Point (-30° C) |
| Oxygen and Nitrogen | Balance | Balance |

Composition of the exhaust stream from the methane recovery unit (4) is as mentioned below:

| | |
|---|---|
| Carbon dioxide (CO₂) | 92-96% |
| Methane | <1% |
| Oxygen and Nitrogen | Balance |

From the above described invention, it is observed that when the exhaust gas from the regenerating dryer (22, 23) and the regenerating first pair of MPSA tower (31, 32) is directed to the buffer balloon (45) for another cycle, passing through vacuum discharge port (44) with the help of vacuum pump (42), more than 99% of the methane was recovered. Further, methane loss to the atmosphere was reduced to less than 1%. Hence, negative environmental effects of methane as a global warming agent can be prevented.

The invention has been explained in relation to specific embodiment. It is inferred that the foregoing description is only illustrative of the present invention and it is not intended that the invention be limited or restrictive thereto. Many other specific embodiments of the present invention will be apparent to one skilled in the art from the foregoing disclosure. All substitution, alterations and modification of the present invention which come within the scope of the following claims are to which the present invention is readily susceptible. The scope of the invention should therefore be determined not with reference to the above description but should be determined with reference to appended claims along with full scope of equivalents to which such claims are entitled.

### List of reference numerals:

Pre-treatment unit (1)
Drying unit (2)
Methane enrichment unit (3)
Methane recovery unit (4)
Biogas inlet (11)
Blower (12, 46)
Activated carbon filter (ACF) (13)
Pre-cooler (14, 47)
Moisture separator (MS) (21, 48)
Pair of drying towers (22, 23) First pair of medium pressure swing
adsorption (MPSA) towers (31, 32)Second pair of medium pressure swing
adsorption (MPSA) towers 49, 50)
Biogas surge tank (33, 51)
Vacuum suction port (VSP) (41)
Vacuum pump (42, 43)
Vacuum discharge port (VDP) (44, 53)
Biogas buffer balloon (45)
Exhaust (52)

## Claims

1. A biogas upgradation system with reduced methane slippage comprising:
a pre-treatment unit (1), a drying unit (2), a methane enrichment unit (3), and a methane recovery unit (4);
said pre-treatment unit (1) includes a blower (12), a biogas inlet (11) for feeding a raw biogas stream into the blower (12), the blower (12) configured to suck and pressurize the raw biogas stream up to 0.7 bar g from said biogas inlet (11), an Activated Carbon Filter, ACF, (13) configured to receive the raw biogas stream through the blower (12) for removing hydrogen sulphide, a pre-cooler (14) configured to reduce the temperature of the pretreated hydrogen sulphide free biogas coming from said ACF (13);
said drying unit (2) includes an Moisture Separator, MS (21) to remove water vapor from said cooled biogas obtained from said pre-cooler (14), a pair of drying towers (22, 23) configured to remove residual water vapor from the cooled biogas obtained from said MS (21);
said methane enrichment unit (3) includes a first pair of MPSA, Medium Pressure Swing Adsorption, towers (31, 32) up to 0.7 bar g (1.7 bar absolute) configured to extract methane from the dried biogas coming out from said drying tower (22, 23), a biogas surge tank (33) configured to collect product gas, which is rich in methane obtained from said first pair of MPSA towers (31, 32);
**characterized in that** said methane recovery unit (4) includes a Vacuum Suction Port, VSP (41) configured to convey the exhaust stream coming out from said drying tower (22, 23) and said MPSA towers (31, 32) to a Vacuum Discharge Port, VDP (44) through a vacuum pump (42), a biogas buffer balloon (45) to store the exhaust stream coming out from said VDP (44) through vacuum pump (42), a blower (46) configured to suck and pressurize the stored exhaust biogas stream from the biogas buffer balloon (45), a pre-cooler (47) configured to reduce the temperature of stored biogas coming out from the biogas buffer balloon (45), a Moisture Separator MS (48) configured to remove water vapor from said cooled gas obtained from said pre-cooler (47), a second pair of MPSA towers (49, 50) configured to extract remaining amount of methane obtained from the dried biogas stream of the MS (48), a biogas surge tank (51) configured to collect persisting amount of methane.

2. The biogas upgradation system with reduced methane slippage as claimed in claim 1, wherein, in use, persisting carbon dioxide in the exhaust stream obtained from said MPSA tower (49, 50) is directed to the VDP (53) through the vacuum pump (42) after which it is collected/vented through an exhaust (52).

3. A method for upgrading biogas with reduced methane slippage, carried out in the biogas upgradation system as claimed in claim 1 and 2, comprises the sequence of steps:
a) introducing the raw biogas feed stream from the biogas inlet (11) through the blower (12) into the ACF (13) for removal of the hydrogen sulphide;
b) feeding the pre-treated hydrogen sulphide free biogas to the pre-cooler (14) for reducing the temperature of the pre-treated biogas;
c) feeding the cooled biogas from the pre-cooler (14) into the MS (21) for removal of water vapor;
d) conveying the partially dried biogas from said MS (21) to the drying tower (22, 23) for residual water removal;
e) directing the dried biogas from said drying tower (22, 23) to the first pair of MPSA towers (31, 32) for adsorbing the carbon dioxide into the molecular sieve by applying pressure;
f) conveying the separated methane into the biogas surge tank (33) from the first pair of MPSA towers (31, 32);
g) collecting the separated product gas, which is rich in methane form the biogas surge tank (33) and compressing it according to its end use;
h) desorbing the said carbon dioxide adsorbed by the molecular sieves in the first pair of MPSA towers (31, 32) by depressurizing the active MPSA tower;
i) directing the exhaust stream of the first pair of MPSA towers (31, 32) and the drying tower (22, 23) to the VSP (41) through the vacuum pump (42);
j) directing further the said exhaust stream through the VSP (41) to the VDP (44);
k) storing the combined exhaust stream obtained from the VDP (44) into the biogas buffer balloon (45);
l) conveying the stored biogas into the pre-cooler (47) for reducing the temperature;
m) conveying the cooled biogas from the pre-cooler (47) into the MS (48) for residual moisture removal;
n) directing said dried biogas into the second pair of MPSA towers (49, 50) for extracting the remaining methane by adsorbing the carbon dioxide into the molecular sieve;
o) the desorbed carbon dioxide from the second pair of MPSA towers (49, 50) is collected/vented through an exhaust (52) by releasing the applied pressure;
p) directing the extracted methane from biogas surge tank (51) to the blower (12);
q) re-circulating the extracted methane as per steps (a) to (g).

4. The method for upgrading biogas as claimed in claim 3, wherein in step a), the hydrogen sulphide content is reduced less than 10ppm.

5. The method for upgrading biogas as claimed in claim 3, wherein in step d), the pair of drying towers (22, 23) is operated sequentially according to the pre-defined cycle time, preferably 5-10 minutes, by activating only one drying tower at a one moment of time, while the other tower is regenerating under the vacuum.

6. The method for upgrading biogas as claimed in claim 3, wherein in step e, n), the first and second pair of MPSA towers (31, 32 and 49, 50) are operated sequentially according to the saturation of the molecular sieve by activating only one MPSA tower at a one moment of time, while the other tower is regenerating under the vacuum.

7. The method for upgrading biogas as claimed in claim 3, wherein in step e), the pressure applied to adsorb the carbon dioxide into the molecular sieve is 0.7 bar g.

## Patentansprüche

1. Biogasaufbereitungssystem mit reduziertem Methanschlupf, bestehend aus:
einem Vorbehandlungseinheit (1), eine Trocknungseinheit (2), eine Methananreicherungseinheit (3) und eine Methanrückgewinnungseinheit (4);
wobei die Vorbehandlungseinheit (1) ein Gebläse (12), einen Biogaseinlass (11) zum Einspeisen eines Rohbiogasstroms in das Gebläse (12), wobei das Gebläse (12) so konfiguriert ist, dass es den Rohbiogasstrom aus dem Biogaseinlass (11) ansaugt und mit einem Druck von bis zu 0,7 bar g beaufschlagt, einen Aktivkohlefilter, ACF, (13), der so konfiguriert ist, dass er den Rohbiogasstrom durch das Gebläse (12) aufnimmt, um Schwefelwasserstoff zu entfernen, einen Vorkühler (14), der so konfiguriert ist, dass er die Temperatur des vorbehandelten, schwefelwasserstofffreien Biogases, das aus dem ACF (13) kommt, reduziert;
die Trocknungseinheit (2) einen Feuchtigkeitsabscheider MS (21) enthält, um Wasserdampf aus dem gekühlten Biogas zu entfernen, das aus dem Vorkühler (14) stammt, ein Paar Trocknungstürme (22, 23), die so konfiguriert sind, dass sie den restlichen Wasserdampf aus dem gekühlten, aus dem MS (21) stammenden Biogas entfernen;
die Methananreicherungseinheit (3) ein erstes Paar MPSA-Türme (31, 32) (Medium Pressure Swing Adsorption - Mittlere Druckwechseladsorption) mit bis zu 0.7 bar g (1.7 bar absolut), die so konfiguriert sind, dass sie Methan aus dem getrockneten Biogas extrahieren, das aus dem Trocknungsturm (22, 23) austritt, und einen Biogasausgleichsbehälter (33), der so konfiguriert ist, dass er Produktgas auffängt, das reich an Methan ist, das aus dem ersten Paar MPSA-Türme (31, 32) erhalten wird;
**dadurch gekennzeichnet, dass** die Methanrückgewinnungseinheit (4) einen Vakuumsauganschluss VSP (41) umfasst, der so konfiguriert ist, dass er den Abgasstrom, der aus dem Trockenturm (22, 23) und den MPSA-Türmen (31, 32) kommt, über eine Vakuumpumpe (42) zu einem Vakuumauslassanschluss VDP (44) befördert, einen Biogas-Pufferballon (45), um den Abgasstrom, der aus dem VDP (44) durch eine Vakuumpumpe (42) austritt, zu speichern, ein Gebläse (46), das so konfiguriert ist, dass es den gespeicherten Abgas-Biogasstrom aus dem Biogas-Pufferballon (45) ansaugt und unter Druck setzt, einen Vorkühler (47), der so konfiguriert ist, dass er die Temperatur des gespeicherten Biogases, das aus dem Biogas-Pufferballon (45) kommt, reduziert, einen Feuchtigkeitsabscheider MS (48), der so konfiguriert ist, dass er Wasserdampf aus dem gekühlten Gas, das von dem Vorkühler (47) erhalten wird, entfernt, ein zweites Paar MPSA-Türme (49, 50), die so konfiguriert sind, dass sie die verbleibende Methanmenge, die aus dem getrockneten Biogasstrom des MS (48) erhalten wird, extrahieren, einen Biogasausgleichsbehälter (51), der so konfiguriert ist, dass er die verbleibende Methanmenge auffängt.

2. System zur Aufbereitung von Biogas mit reduziertem Methanschlupf, wie in Anspruch 1, wobei im Betrieb das im Abgasstrom, der vom MPSA-Turm (49, 50) erhalten wird, verbleibende Kohlendioxid durch die Vakuumpumpe (42) zum VDP (53) geleitet wird, wonach es durch einen Auslass (52) gesammelt/abgeleitet wird.

3. Verfahren zur Aufbereitung von Biogas mit reduziertem Methanschlupf, durchgeführt im Biogasaufbereitungssystem nach Anspruch 1 und 2 die Abfolge der Schritte umfasst:
a) Einleiten des Rohbiogas-Einspeisestroms aus dem Biogaseinlass (11) durch das Gebläse (12) in den ACF (13) zur Entfernung des Schwefelwasserstoffs;
b) Einspeisung des vorbehandelten schwefelwasserstofffreien Biogases in den Vorkühler (14) zur Senkung der Temperatur des vorbehandelten Biogases;
c) Einspeisung des gekühlten Biogases aus dem Vorkühler (14) in die MS (21) zur Entfernung von Wasserdampf;
d) Förderung des teilweise getrockneten Biogases aus der MS (21) in den Trocknungsturm (22, 23) zur Entfernung von Restwasser;
e) Leiten des getrockneten Biogases aus dem Trocknungsturm (22, 23) zum ersten Paar MPSA-Türme (31, 32), um das Kohlendioxid durch Anwendung von Druck in das Molekularsieb zu adsorbieren;
f) Förderung des abgetrennten Methans aus dem ersten Paar MPSA-Türme (31, 32) in den Biogasausgleichsbehälter (33);
g) Sammeln des abgetrennten, methanreichen Produktgases aus dem Biogasausgleichsbehälter (33) und dessen Verdichtung je nach seiner Endverwendung;
h) Desorbieren des durch die Molekularsiebe im ersten Paar MPSA-Türme (31, 32) adsorbierten Kohlendioxids durch Druckentlastung des aktiven MPSA-Turms;
i) Leiten des hs des ersten Paars von MPSA-Türmen (31, 32) und des Trockenturms (22, 23) zum VSP (41) durch die Vakuumpumpe (42);
j) Weiterleitung des Abgasstroms durch den VSP (41) zum VDP (44);
k) Speicherung des kombinierten Abgasstroms aus dem VDP (44) im Biogas-Pufferballon (45);
l) Förderung des gespeicherten Biogases in den Vorkühler (47) zur Senkung der Temperatur;
m) Förderung des gekühlten Biogases aus dem Vorkühler (47) in die MS (48) zur Entfernung der Restfeuchte;
n) Leiten des getrockneten Biogases in das zweite Paar MPSA-Türme (49, 50) zur Extraktion des restlichen Methans durch Adsorption des Kohlendioxids an das Molekularsieb;
o) das desorbierte Kohlendioxid aus dem zweiten Paar MPSA-Türme (49, 50) wird durch Ablassen des angelegten Drucks über einen Auslass (52) gesammelt/abgeleitet;
p) Leiten des aus dem Biogasausgleichsbehälter (51) abgesaugten Methans zum Gebläse;
q) Rückführung des extrahierten Methans gemäß den Schritten (a) bis (g).

4. Verfahren zur Aufbereitung von Biogas nach Anspruch 3, wobei in Schritt a) der Schwefelwasserstoffgehalt um weniger als 10 ppm reduziert wird.

5. Verfahren zur Aufbereitung von Biogas nach Anspruch 3, wobei in Schritt d) das Trockenturm-Paar (22, 23) nacheinander entsprechend der vordefinierten Zykluszeit, vorzugsweise 5-10 Minuten, betrieben wird, indem nur ein Trockenturm zu einem bestimmten Zeitpunkt aktiviert wird, während der andere Turm unter Vakuum regeneriert wird.

6. Verfahren zur Aufbereitung von Biogas nach Anspruch 3, wobei in Schritt e, n) das erste und das zweite Paar von MPSA-Türmen (31, 32 und 49, 50) nacheinander entsprechend der Sättigung des Molekularsiebs betrieben werden, indem nur ein MPSA-Turm zu einem bestimmten Zeitpunkt aktiviert wird, während der andere Turm unter Vakuum regeneriert wird.

7. Verfahren zur Aufbereitung von Biogas nach Anspruch 3, wobei in Schritt e) der zur Adsorption des Kohlendioxids in das Molekularsieb aufgebrachte Druck 0,7 bar g beträgt.

## Revendications

1. Système de valorisation du biogaz avec une réduction de la fuite de méthane comprenant :
une unité de prétraitement (1), une unité de séchage (2), une unité d'enrichissement du méthane (3) et une unité de récupération du méthane (4) ;
ladite unité de prétraitement (1) comprend une soufflante (12), une entrée de biogaz (11) pour alimenter un flux de biogaz brut dans la soufflante (12), la soufflante (12) étant configurée pour aspirer et pressuriser le flux de biogaz brut jusqu'à 0.7 bar g à partir de ladite entrée de biogaz (11), un filtre à charbon actif (ACF) (13) configuré pour recevoir le flux de biogaz brut à travers la soufflante (12) afin d'éliminer le sulfure d'hydrogène, un pré-refroidisseur (14) configuré pour réduire la température du biogaz prétraité exempt de sulfure d'hydrogène provenant dudit ACF (13) ;
ladite unité de séchage (2) comprend un séparateur d'humidité, MS (21) pour éliminer la vapeur d'eau dudit biogaz refroidi obtenu à partir dudit prérefroidisseur (14), une paire de tours de séchage (22, 23) configurées pour éliminer la vapeur d'eau résiduelle du biogaz refroidi obtenu à partir dudit MS (21) ;
ladite unité d'enrichissement en méthane (3) comprend une première paire de tours MPSA (Medium Pressure Swing Adsorption - adsorption par oscillation de pression moyenne) (31, 32) allant jusqu'à 0.7 bar g (1.7 bar absolu) configurée pour extraire le méthane du biogaz séché sortant de ladite tour de séchage (22, 23), un réservoir tampon de biogaz (33) configuré pour collecter le gaz produit, qui est riche en méthane obtenu à partir de ladite première paire de tours MPSA (31, 32) ;
**caractérisée par le fait que** ladite unité de récupération du méthane (4) comprend un port d'aspiration sous vide, VSP (41) configuré pour acheminer le flux d'échappement sortant de ladite tour de séchage (22, 23) et desdites tours MPSA (31, 32) vers un port de décharge sous vide, VDP (44), à travers une pompe à vide (42), un ballon tampon de biogaz (45) pour stocker le flux d'échappement sortant dudit VDP (44) une pompe à vide (42), une soufflante (46) configurée pour aspirer et pressuriser le flux de biogaz d'échappement stocké à partir du ballon tampon de biogaz (45), un pré-refroidisseur (47) configuré pour réduire la température du biogaz stocké sortant du ballon tampon de biogaz (45), un séparateur d'humidité MS (48) configuré pour éliminer la vapeur d'eau dudit gaz refroidi obtenu à partir dudit pré-refroidisseur (47), une deuxième paire de tours MPSA (49, 50) configurée pour extraire la quantité restante de méthane obtenue à partir du flux de biogaz séché du MS (48), un réservoir tampon de biogaz (51) configuré pour collecter la quantité persistante de méthane.

2. Système de valorisation du biogaz avec une réduction de la fuite de méthane, tel que revendiquée dans la revendication 1, dans laquelle, en cours d'utilisation, le dioxyde de carbone persistant dans le flux d'échappement obtenu à partir de ladite tour MPSA (49, 50) est dirigé vers le VDP (53) à travers la pompe à vide (42), après quoi il est collecté/évacué par un échappement (52).

3. Méthode de valorisation du biogaz avec une réduction de la fuite de méthane, réalisée en le système de valorisation du biogaz tel que revendiqué dans les revendications 1 et 2, comprend la séquence d'étapes :
a) introduire le flux d'alimentation en biogaz brut à partir de l'entrée de biogaz (11) à travers la soufflante (12) dans l'ACF (13) pour l'élimination du sulfure d'hydrogène ;
b) acheminer le biogaz prétraité exempt de sulfure d'hydrogène vers le prérefroidisseur (14) afin de réduire la température du biogaz prétraité ;
c) acheminer le biogaz refroidi provenant du prérefroidisseur (14) dans le MS (21) pour l'élimination de la vapeur d'eau ;
d) acheminer le biogaz partiellement séché depuis ledit MS (21) vers la tour de séchage ( 22, 23) pour l'élimination de l'eau résiduelle ;
e) diriger le biogaz séché de ladite tour de séchage (22, 23) vers la première paire de tours MPSA (31, 32) pour adsorber le dioxyde de carbone dans le tamis moléculaire en appliquant une pression ;
f) acheminer le méthane séparé dans le réservoir tampon de biogaz (33) à partir de la première paire de tours MPSA (31, 32) ;
g) collecter le gaz produit séparé, riche en méthane, dans le réservoir tampon de biogaz (33) et le comprimer en fonction de son utilisation finale ;
h) désorber ledit dioxyde de carbone adsorbé par les tamis moléculaires dans la première paire de tours MPSA (31, 32) en dépressurisant la tour MPSA active ;
i) diriger le flux d'échappement de la première paire de tours MPSA (31, 32) et de la tour de séchage (22, 23) vers le VSP (41) à travers la pompe à vide (42) ;
j) diriger ledit flux d'échappement à travers le VSP (41) vers le VDP (44)
k) stocker le flux d'échappement combiné obtenu à partir du VDP (44) dans le ballon tampon de biogaz (45) ;
l) acheminer le biogaz stocké dans le prérefroidisseur (47) pour en réduire la température ;
m) acheminer le biogaz refroidi du prérefroidisseur (47) dans le MS (48) pour l'élimination de l'humidité résiduelle ;
n) diriger ledit biogaz séché dans la deuxième paire de tours MPSA (49, 50) pour extraire le méthane restant en adsorbant le dioxyde de carbone dans le tamis moléculaire ;
o) le dioxyde de carbone désorbé provenant de la deuxième paire de tours MPSA (49, 50) est collecté/évacué à travers un échappement (52) en relâchant la pression appliquée ;
p) diriger le méthane extrait du réservoir tampon de biogaz (51) vers la soufflante (12) ;
q) remise en circulation du méthane extrait conformément aux étapes a) à g).

4. Méthode de valorisation du biogaz selon la revendication 3, dans laquelle, à l'étape a), la teneur en sulfure d'hydrogène est réduite de moins de 10 ppm.

5. Méthode de valorisation du biogaz selon la revendication 3, dans laquelle, à l'étape d), la paire de tours de séchage (22, 23) fonctionne de manière séquentielle selon le temps de cycle prédéfini, de préférence de 5 à 10 minutes, en activant une seule tour de séchage à un moment donné, tandis que l'autre tour est en train de se régénérer sous le vide.

6. Méthode de valorisation du biogaz selon la revendication 3, dans laquelle, à l'étape e, n), la première et la deuxième paire de tours MPSA (31, 32 et 49, 50) fonctionnent de manière séquentielle selon la saturation du tamis moléculaire en activant une seule tour MPSA à un moment donné, tandis que l'autre tour est en train de se régénérer sous le vide.

7. Méthode de valorisation du biogaz selon la revendication 3, dans laquelle, à l'étape e), la pression appliquée pour adsorber le dioxyde de carbone dans le tamis moléculaire est de 0,7 bar g.
